# EUROPÄISCHE PATENTSCHRIFT

(11) **EP 3 169 473 B1**
(45) Veröffentlichungstag und Bekanntmachung des Hinweises auf die Patenterteilung: **28.08.2019**
(21) Anmeldenummer: 15735631.2
(22) Anmeldetag: 07.07.2015
(51) Int. Cl.: B23K 9/167, B23K 9/16, B23K 9/24, B23K 35/02, H05H 1/28, H05H 1/34

(54) **VERFAHREN ZUM WOLFRAM-SCHUTZGASSCHWEISSEN**
METHOD FOR TUNGSTEN SHIELDED WELDING
PROCÉDÉ DE SOUDAGE AU TUNGSTÈNE SOUS PROTECTION GAZEUSE

(30) Priorität: 15.07.2014 DE 102014010489; 05.02.2015 DE 102015001456
(43) Veröffentlichungstag der Anmeldung: 24.05.2017
(73) Patentinhaber: Linde Aktiengesellschaft, 80331 München (DE)
(72) Erfinder: SIEWERT, Erwan, 85283 Niederlauterbach (DE)
(86) Internationale Anmeldenummer: PCT/EP2015/001383
(87) Internationale Veröffentlichungsnummer: WO 2016/008573

(56) Entgegenhaltungen:
- EP-A1- 0 794 696
- DE-A1- 2 755 560
- DE-A1- 3 426 410
- JP-A- 2008 200 750
- RU-C2- 2 182 061

## Beschreibung

Die Erfindung betrifft ein Verfahren zum Wolfram-Inertgasschweißen, wobei eine Elektrode und ein Werkstück mit einem Schweißstrom bestromt werden, wobei die Elektrode als Anode und das Werkstück als Kathode bestromt wird, wobei ein Lichtbogen zwischen einer lichtbogenseitigen Fläche der Elektrode und dem Werkstück initiiert wird und brennt, wie zum Beispiel aus der DE 27 55 560 A1 bekannt.

### Stand der Technik

Beim Wolfram-Schutzgasschweißen, insbesondere beim Wolfram-Inertgasschweißen (WIG-Schweißen) und beim Plasmaschweißen handelt es sich um Verfahren zum Lichtbogenschweißen, die beispielsweise zum Auftragsschweißen, Verschweißen oder Verlöten von ein, zwei oder mehreren Werktücken aus metallischen Werkstoffen verwendet werden können. Das Werkstück und eine Wolframelektrode eines entsprechenden Schweißbrenners zum Wolfram-Schutzgasschweißen werden dabei elektrisch mit einer Schweißstromquelle verbunden. Ein Lichtbogen brennt zwischen der Wolframelektrode und dem Werkstück. Das Werkstück wird dabei zumindest teilweise aufgeschmolzen und bildet dort das Schmelzbad. Bei den meisten Werkstoffen wird die Wolframelektrode als Kathode verwendet und das Werkstück als Anode, wobei auf der Basis der physikalischen Stromrichtung Elektronen von der Wolframelektrode in das Werkstück übergehen.

Das Plasmaschweißen ist eine spezielle Ausführung des Wolfram-Inertgasschweißens. Beim Plasmaschweißen werden wenigstes zwei unabhängige Gase bzw. Gasgemische zugeführt. Zum einen wird ein Plasmagas (auch Zentrumsgas genannt) eingesetzt, welches durch die hohe Temperatur und die hohe Energie des Lichtbogens (zumindest teilweise) ionisiert wird. Durch den Lichtbogen wird somit ein Plasma erzeugt. Als Plasmagas wird insbesondere Argon oder ein Gasgemisch aus Argon mit Anteilen an Wasserstoff oder Helium verwendet. Das Außengas fungiert dabei als ein Schutzgas. Durch Helium oder ein heliumhaltiges Gasgemisch als Schutzgas kann die Wärmeleitfähigkeit verbessert und der Energieeintrag in das Werkstück gesteigert werden. Jedoch ist Helium im Vergleich zu anderen Schutzgasen wie Argon erheblich teurer und nicht überall verfügbar. Das Plasmaschweißen hat im Vergleich zum Wolfram-Inertgasschweißen den Nachteil, dass ein entsprechender Brenner zum Plasmaschweißen aufwendiger und teurer ist und durch den größeren Brenner die Zugänglichkeit und das Handling verschlechtert werden. Plasmaschweißen kann daher zumeist nur automatisiert durchgeführt werden.

Für das Wolfram-Schutzgasschweißen werden zumeist stabförmige Elektroden aus reinem Wolfram oder aus Wolfram mit Zusätzen aus Metallen der Seltenen Erden (beispielsweise Lanthan, Cer, Yttrium), Zirconium und Thorium eingesetzt. Diese Zusätze liegen zumeist als Oxide vor. Für die kathodische Polung werden die Elektroden werkstückseitig spitz angeschliffen. Die genannten Zusätze im Wolfram reduzieren die Austrittsarbeit der Elektronen, so dass die als Kathoden bestromten Elektroden bei sehr hohen Strömen betrieben werden können.

Das Wolfram-Inertgasschweißen bzw. Plasmaschweißen mit negativ gepolter Wolframelektrode kann beispielsweise für Aluminium, Aluminiumlegierungen, Bronze, Magnesium, Magnesiumlegierungen, Titan oder für weitere Werkstoffe, die hochschmelzende Oxide bilden, nicht oder nur bedingt eingesetzt werden. Problematisch ist, dass diese hochschmelzenden Oxide nicht aufgelöst werden. Daher können das Schmelzbad schwer beherrscht und die Schmelzbadausbildung unter der Oxidschicht schwer beobachtet werden. Es besteht die Gefahr von Oxideinschlüssen. Zudem ist der Energieeintrag in das Bauteil gering.

Zwar kann die Polarität der Wolframelektrode und des Werkstücks umgekehrt werden, indem die Wolframelektrode als Anode und das Werkstück als Kathode verwendet werden. Elektronen gehen in diesem Fall vom Werkstück in die Wolframelektrode über (physikalische Stromrichtung). Durch diese aus dem Werkstück austretenden Elektronen bzw. durch ein entsprechendes lonenbombardement kann eine Oxidschicht, welche sich auf dem Werkstück bildet bzw. auf diesem vorhanden ist, aufgelöst werden, wodurch eine Reinigungswirkung erzielt wird. Durch diese Reinigungswirkung können Einschlüsse von Oxiden in der Schweißnaht vermieden werden. Beim Plasmaschweißen mit Stichloch wird dieser Effekt beispielsweise im Vergleich zum Wolfram-Inertgasschweißen verstärkt, da die gesamten Flanken der Fügepartner mit dem Plasma in Kontakt kommen und effektiv gereinigt werden.

Jedoch kann eine derartige Polung der Wolframelektrode als Anode nicht oder zumindest kaum effektiv und wirtschaftlich eingesetzt werden, da die Belastbarkeit der als Anode bestromten Wolframelektrode, insbesondere die thermische Belastbarkeit und die Strombelastbarkeit stark begrenzt sind. Beispielsweise beträgt die Strombelastbarkeit einer Wolframelektrode mit einem Durchmesser von 3,2 mm typischerweise zwischen 20 A und 35 A.

Trotz dieser geringen Stromstärken besteht dennoch die Gefahr, dass die Wolframelektrode aufgeschmolzen wird und dass aufgeschmolzenes Material von der Wolframelektrode abgelöst wird. Dies kann einerseits zu einer Zerstörung der Wolframelektrode und zu Prozessschwankungen führen sowie andererseits zu einer Verunreinigungen der Schweißnaht, wenn aufgeschmolzenes Material von der Wolframelektrode in das Schmelzbad des Werkstücks gelangt.

Durch derartige Verunreinigungen entstehen Fehler in der Schweißnaht, welche nur durch aufwendige Nacharbeit behoben werden können. Durch die geringe Strombelastbarkeit und somit durch die geringen Schweißströme, mit welchen die Wolframelektrode bestromt werden kann, kann zumeist nur ein geringer Energieeintrag in das Werkstück erzielt werden. Eine derartige Polung der Wolframelektrode als Anode kann daher zumeist nur für sehr dünne Werkstücke eingesetzt werden oder kann aufgrund der potentiellen Gefahr von Wolframeinschlüssen überhaupt nicht verwendet werden. Zudem ist die Schweißgeschwindigkeit gering.

Um die Belastbarkeit der Elektrode zu erhöhen und gleichzeitig eine gute Reinigungswirkung zu erzielen, können Wolframelektroden zwar mit Wechselstrom bestromt werden. Beispielsweise kann die Strombelastbarkeit einer Wolframelektrode mit einem Durchmesser von 3,2 mm auf ca. 200 A erhöht werden. Allerdings sind Stromquellen, die einen derartigen Wechselstrom bereitstellen, sehr aufwendig und deutlich teurer als entsprechende Gleichstromquellen. Zudem entsteht beim Betrieb der Wolframelektrode mit Wechselstrom eine starke akustische Belastung für den Bediener. Ferner werden die Augen des Schweißers stärker beansprucht, da sich die Intensität der Lichtbogenstrahlung ständig durch den sich ändernden Schweißstrom verändert. Darüber hinaus besteht auch bei einem Wechselstrombetrieb die Gefahr, dass es zu einer Verunreinigung der Schweißnaht kommt. Zudem reduziert sich die in das Werkstück eingebrachte Energie im Vergleich zu einer Pluspolung der Wolframelektrode.

Aus dem Stand der Technik sind zwar Möglichkeiten bekannt, um die thermische Belastbarkeit von Elektroden beim Wolfram-Schutzgasschweißen zu verbessern. Jedoch sind diese Möglichkeiten nicht dazu geeignet, die Strombelastbarkeit einer als Anode bestromten Elektrode beim Wolfram-Schutzgasschweißen zu verbessern. Der Grundgedanke dieser Konzepte besteht dabei zumeist darin, die große Wärmemenge, welche auf die Elektrode trifft, effizient abzuführen. Zum einen wurde versucht die Kühlung der Elektrode zu verbessern, wie es beispielsweise in der DE 42 34 267 A1, der DE 42 05 420 A1, der DE 29 27 996A1 oder der US 3 569 661 A beschrieben wird.

Zum anderen kann ein hochschmelzender Einsatz in einen Körper aus Kupfer eingebracht werden und dieser Einsatz kann wassergekühlt werden, wie es beispielsweise in der US 4 590 354 oder der DE 10 2009 059 108 A1 oder DE 29 19 084 C2 beschrieben wird. Jedoch wird ein entsprechender Einsatz dabei als Kathode eingesetzt. Dabei spielen sich komplett andere Mechanismen ab, als es bei einer Verwendung als Anode der Fall ist. Derartige Einsätze sind also ungeeignet für das Wolfram-Schutzgasschweißen, bei welchem die Wolframelektrode als Anode bestromt wird.

Eine entsprechende Konstruktion, die als Anode verwendet wird, wird zwar beispielsweise in der EP 0 794 696 B1 oder der US 3 242 305 offenbart. Allerdings weisen auch derartige Elektroden nur eine geringe Strombelastbarkeit auf und eine Verwendung derartiger Elektroden bei Schweißstromstärken jenseits des Bereichs zwischen 20 A und 35 A ("Hochstrom-Schweißen") ist nicht oder kaum möglich.

Der Grund hierfür ist, dass eine gute Kühlung der als Anode bestromten Elektrode zu einem punktuellen Ansatz des Lichtbogens an der Anode führen kann, welcher zu sehr hohen Stromdichten und somit zu einer Zerstörung der Anode führen kann. Ist ein derartiger punktueller Lichtbogenansatz erreicht, wird Anodenmaterial verdampft, wodurch es zu einem selbstverstärkenden Effekt kommt. Der Lichtbogen findet am Ort der Verdampfung besonders günstige Ansatzbedingungen vor und fokussiert die Energieeinbringung an dieser Stelle. Da die Abläufe im Plasma um Größenordnungen schneller ablaufen als im Festkörper, kann eine Zerstörung der Anode auch durch eine gute Wärmeleitung und eine effektive Kühlung nicht verhindert werden.

Es ist daher wünschenswert, das Wolfram-Schutzgasschweißen, insbesondere das Wolfram-Inertgasschweißen bzw. Plasmaschweißen, mit einer als Anode bestromten Elektrode zu verbessern, insbesondere dahingehend, dass eine Strombelastbarkeit der Elektrode insbesondere für das Hochstrom-Schweißen erhöht werden kann.

### Offenbarung der Erfindung

Diese Aufgabe wird durch ein Verfahren zum Wolfram-Inertgasschweißen, mit den Merkmalen des Patentanspruchs 1 gelöst. Vorteilhafte Ausgestaltungen sind Gegenstand der jeweiligen Unteransprüche sowie der nachfolgenden Beschreibung.

Ausführungen im Folgenden zum Wolfram-Schutzgasschweißen und zum Plasmaschweißen fallen nicht unter den Schutzumfang der Erfindung.

Eine Elektrode und ein Werkstück werden mit einem Schweißstrom bestromt, wobei die Elektrode als Anode und das Werkstück als Kathode bestromt wird. Ein Lichtbogen wird zwischen einer lichtbogenseitigen Fläche der Elektrode und dem Werkstück initiiert und brennt dort. Erfindungsgemäß werden eine Energiedichte der lichtbogenseitigen Fläche der Elektrode und/oder ein Lichtbogenansatz des Lichtbogens an der lichtbogenseitigen Fläche der Elektrode gezielt beeinflusst. Hierdurch ist es, wie weiter unten im Detail erläutert, möglich, die Strombelastbarkeit der Elektrode signifikant zu erhöhen.

Im Zuge des Wolfram-Schutzgasschweißens kann beispielsweise eine Auftragsschweißung, eine Schweißung oder eine Lötung oder eine Oberflächenbehandlung von ein, zwei oder mehreren Werkstücken aus metallischen Werkstoffen durchgeführt werden.

Insbesondere wird beim Schweißen ein Schutzgas zugeführt. Ein entsprechender Schweißbrenner umfasst insbesondere eine Schutzgasdüse zur Zufuhr des Schutzgases. Durch das Schutzgas wird der Lichtbogen direkt beeinflusst. Durch eine Zusammensetzung des Schutzgases kann die Effizienz des Schweißens direkt beeinflusst werden. Im Falle eines Schweißbrenners zum Plasmaschweißen umfasst dieser Plasmaschweißbrenner alternativ oder zusätzlich insbesondere eine Plasmagasdüse zum Zuführen eines Plasmagases, welches zumindest teilweise ionisiert wird.

### Vorteile der Erfindung

Durch das gezielte Beeinflussen der Energiedichte und/oder des Lichtbogenansatzes wird insbesondere ein punktueller Ansatz des Lichtbogens auf der Elektrode vermieden. Somit werden hohe Energiedichten, insbesondere hohe Stromdichten, durch welche die Elektrode zerstört werden kann, vermieden. Weiterhin wird die Elektrode effektiv gekühlt. Somit kann eine Zerstörung der Elektrode verhindert werden. Weiterhin können Verunreinigungen bzw. Fehler der Schweißnaht verhindert werden, welche durch eine stark aufgeschmolzene Elektrode auftreten können.

Da durch die Erfindung hohe Energiedichten an der Elektrode vermieden werden können und die Elektrode gekühlt wird, kann die Belastbarkeit der als Anode verwendeten Elektrode erhöht werden. Beim erfindungsgemäßen Wolfram-Schutzgasschweißen kann die Elektrode mit sehr viel größeren Strömen bestromt werden, als es beim herkömmlichen Wolfram-Schutzgasschweißen der Fall ist. Somit kann weiterhin eine Reinigungswirkung des Werkstücks erhöht werden, wenn die Elektrode als Anode und das zu schweißende Werkstück als Kathode verwendet wird. Dadurch wird eine Oxidschicht, welche sich gegebenenfalls auf dem Werkstück bildet, mit hoher Effizienz aufgelöst.

Durch die Erfindung wird es also ermöglicht, eine Strombelastbarkeit der als Anode bestromten Elektrode beim Wolfram-Schutzgasschweißen zu erhöhen. Durch die Erfindung kann die Elektrode mit Schweißströmen bis zu 500 A betrieben werden. Somit wird insbesondere ein Hochstrom-Schweißen durchgeführt und die Elektrode wird insbesondere als Hochstrom-Anode verwendet. Vorzugsweise wird die Elektrode mit einem Schweißstrom mit einer Stromstärke zwischen 80 A und 500 A bestromt. Durch die Erfindung wird somit ein Hochstrom-Pluspol-Wolfram-Schutzgasschweißen ermöglicht, bei welchem die Anode auch bei hohen Schweißstromstärken betrieben werden kann.

Durch die Erfindung kann ein hoher Energieeintrag in das als Kathode geschaltete Werkstück erzielt werden. Dieser hohe Energieeintrag wird insbesondere durch hohe Fallspannungen im Kathodenfallgebiet verursacht sowie durch den Energieeintrag durch Ionen. Weiterhin können eine hohe Schweißgeschwindigkeit sowie ein tiefer Einbrand erreicht werden. Auch vergleichsweise dicke Werkstücke bzw. Bauteile können durch die Erfindung wirtschaftlich geschweißt werden. Einschlüsse von Oxiden oder von Elektrodenmaterial im Werkstück können vermieden werden, da die Oberfläche des als Kathode geschalteten Werkstücks effektiv gereinigt wird und die als Anode geschaltete Elektrode durch die hohe thermische Belastbarkeit nicht aufgeschmolzen wird.

Eine auf den Lichtbogen wirkende Lorentzkraft hängt insbesondere von dem Durchmesser des Lichtbogenansatzes an der Anode und der Kathode (also an der Elektrode und dem Werkstück) ab. Die Lorentzkraft bedingt eine Stabilität einer Lichtbogenströmung. Diese Lichtbogenströmung bezeichnet insbesondere eine Energieströmung zwischen Elektrode und Werkstück und ist für die Stabilität des Prozesses entscheidend. Je stabiler und stärker diese Lichtbogenströmung zum Werkstück ist, desto größer ist der Energieeintrag in das Werkstück und desto gleichmäßiger ist die Ausbildung der Schweißnaht. Durch das gezielte Beeinflussen der Energiedichte und/oder des Lichtbogenansatzes kann diese Strömung insbesondere verstärkt werden, wodurch der Energieeintrag in das zu schweißende Werkstück erhöht und die Prozessstabilität verbessert wird.

Durch die Erfindung wird es insbesondere ermöglicht, Leichtmetalle wie Aluminium, Aluminiumlegierungen, Magnesium, Magnesiumlegierungen, Titan oder weitere Werkstoffen wie z.B. Bronze prozesssicher und effizient zu schweißen. Dies wird insbesondere durch den hohen Energieeintrag eines Hochstrom-Lichtbogens in das als Kathode geschaltete Werkstück ermöglicht.

Gemäß einer ersten vorteilhaften Ausführung der Erfindung werden die Energiedichte und/oder der Lichtbogenansatz gezielt beeinflusst, indem für einen ausgewählten Bereich der lichtbogenseitigen Fläche der Elektrode ein Material gewählt bzw. verwendet wird, welches sich von einem Elektrodenmaterial der übrigen Elektrode unterscheidet. Die lichtbogenseitige Fläche der Elektrode wird insbesondere teilweise aus dem Elektrodenmaterial und teilweise aus diesem vom Elektrodenmaterial verschiedenen Material gebildet.

Durch diesen ausgewählten Bereich kann der Ansatz des Lichtbogens gezielt beeinflusst werden. Insbesondere setzt der Lichtbogen direkt an diesem Bereich an. Das Material des ausgewählten Bereichs bzw. die physikalischen Eigenschaften dieses Materials (insbesondere Schmelzpunkt, Siedepunkt, elektrische und thermische Leitfähigkeit sowie Austrittsarbeit) werden im Vergleich zu dem Elektrodenmaterial derart gewählt, dass der Lichtbogen favorisiert an diesem ausgewählten Bereich ansetzt. Dies wird insbesondere dadurch erreicht, dass die physikalischen und geometrischen Eigenschaften dieses Materials an die Stromstärke angepasst werden. Die physikalischen und geometrischen Eigenschaften werden insbesondere derart gewählt, dass das Material maximal marginal, aber gleichmäßig angeschmolzen wird. Somit wird die Gefahr vermieden, dass der Lichtbogen punktuell an der Elektrode selbst ansetzt und dass die Elektrode dadurch aufgeschmolzen wird. Da der Lichtbogen favorisiert an dem ausgewählten Bereich ansetzt, erhitzt sich die Elektrode nicht so stark, wie eine Elektrode beim herkömmlichen Wolfram-Schutzgasschweißen. Somit kann eine Zerstörung der Elektrode sowie Verunreinigungen bzw. Fehler der Schweißnaht durch eine stark aufgeschmolzene Elektrode verhindert werden.

Vorzugsweise wird das von dem Elektrodenmaterial verschiedene Material des ausgewählten Bereichs in Abhängigkeit von einer Stromstärke des Schweißstroms gewählt. Bevorzugt wird ein Durchmesser des ausgewählten Bereichs in Abhängigkeit von einer Stromstärke des Schweißstroms gewählt. Insbesondere wird für höhere Stromstärken ein größerer Durchmesser verwendet. Bei Materialien mit einer geringeren Austrittsarbeit werden insbesondere geringere Durchmesser verwendet. Somit wird insbesondere erzielt, dass der Lichtbogen nicht punktförmig, sondern gleichmäßig ansetzt und die Elektrode nicht durch zu große Energiedichten zerstört wird.

Bevorzugt wird ein hochschmelzendes Material als Material für den ausgewählten Bereich gewählt. Insbesondere wird ein höherschmelzendes Material als das Elektrodenmaterial, weiter insbesondere ein höherschmelzendes Refraktärmetall als das Elektrodenmaterial für den ausgewählten Bereich gewählt. Da der Lichtbogen insbesondere an dem ausgewählten Bereich ansetzt, kann durch Verwendung eines hochschmelzenden Materials verhindert werden, dass das Material des ausgewählten Bereichs aufschmilzt. Weiterhin wird somit verhindert, dass die restliche Elektrode aus vergleichsweise niedrigschmelzendem Material aufgeschmolzen wird.

Bevorzugt wird Zirkonium, Kohlenstoff, Rhenium, Tantal, Yttrium, Niob, Hafnium, reines Wolfram oder Wolfram mit Zusätzen aus Metallen der Seltenen Erden (wie Lanthan, Cer, Yttrium), Zirconium und/oder Thorium verwendet als Material für den ausgewählten Bereich verwendet. Diese Zusätze im Wolfram liegen insbesondere als Oxide vor.

Bei Verwendung von Hafnium können besonders vorteilhaft auch aktive Gase wie Kohlendioxid oder Sauerstoff als Schutzgas verwendet werden, ohne dass die Elektrode zerstört wird. Beim herkömmlichen Wolfram-Schutzgasschweißen würde die Elektrode aufgrund der großen Sauerstoffaffinität von aktiven Gasen zerstört werden.

Gemäß einer vorteilhaften Ausführung der Erfindung wird das Material für den ausgewählten Bereich in Form eines Einsatzes in der lichtbogenseitigen Fläche der Elektrode verwendet. Demgemäß wird insbesondere eine Elektrode verwendet, die wenigstens einen Einsatz aus dem von dem Elektrodenmaterial verschiedenen Material aufweist. Dieser Einsatz ist insbesondere derart in die Elektrode eingebracht, dass der Einsatz zumindest teilweise an der lichtbogenseitigen Fläche der Elektrode angeordnet ist. Die lichtbogenseitige Fläche der Elektrode wird somit teilweise aus dem Elektrodenmaterial und teilweise aus dem Material des Einsatzes gebildet, kann aber auch komplett aus einem hochschmelzenden Material bestehen. Der Einsatz kann dabei aus der Elektrode herausragen oder eine geschlossene Fläche mit der restlichen Elektrode bilden.

Der Einsatz kann dabei in einer geeigneten geometrischen Form ausgebildet sein, beispielsweise würfel-, quader- oder zylinderförmig. Dieser Einsatz kann sich insbesondere über die komplette axiale Ausdehnung der Elektrode erstrecken. Weiter insbesondere kann der Einsatz nur eine begrenzte Ausdehnung in axialer Richtung der Elektrode besitzen und somit beispielsweise nur unmittelbar an der lichtbogenseitigen Fläche der Elektrode angeordnet sein. Insbesondere werden der Durchmesser, die Austrittsarbeit und der Schmelzpunkt des Einsatzes an die zu erzielende Stromstärke des Schweißstroms angepasst. Diese Parameter werden insbesondere derart angepasst, dass der Einsatz im Betrieb über den gesamten entsprechenden Teil der lichtbogenseitigen Fläche der Elektrode gleichmäßig erwärmt wird.

Gemäß einer zweiten vorteilhaften Ausführung der Erfindung werden die Energiedichte und/oder der Lichtbogenansatz gezielt beeinflusst, indem der lichtbogenseitigen Fläche der Elektrode ein Fokussiergas in Form wenigstens einer Fokussiergasströmung zugeführt wird. Das Fokussiergas wird insbesondere zusätzlich zu einem Schutzgas und/oder einem Plasmagas zugeführt. Das Fokussiergas wird insbesondere in Form einer Fokussiergasströmung zugeführt. Unter Fokussieren des Lichtbogens ist dabei zu verstehen, dass der Ansatz des Lichtbogens auf der lichtbogenseitigen Fläche der Elektrode fokussiert bzw. bewegt wird, also auf einen bestimmten Bereich der Elektrode eingeschnürt bzw. über eine bestimmte Fläche bewegt wird. Menge und Zusammensetzung des Fokussiergases können insbesondere verändert werden. Bevorzugt wird Argon, Helium oder ein Gemisch aus Argon und Helium als Fokussiergas zugeführt.

Das zugeführte Fokussiergas bzw. die Fokussiergasströmung übt dabei eine kühlende Wirkung auf die Elektrode aus, insbesondere auf die lichtbogenseitige Fläche der Elektrode. Durch das Fokussiergas wird die Elektrode direkt gekühlt. Weiterhin wird durch das Fokussiergas bzw. durch den Impuls der Fokussiergasströmung ein Druck auf den Lichtbogen, insbesondere auf den Lichtbogenansatz ausgeübt. Der Lichtbogen kann somit in den Randbereichen gekühlt werden. Durch diese kühlende Wirkung, den ausgeübten Druck sowie durch physikalische und chemische Eigenschaften des Fokussiergases wird der Ansatz des Lichtbogens beeinflusst.

Je nachdem, wie die Fokussiergasströmung relativ zu der Elektrode bzw. relativ zu dem Lichtbogen gerichtet ist, kann der Ansatz des Lichtbogens auf der lichtbogenseitigen Fläche der Elektrode fokussiert werden und auf einen bestimmten Bereich eingeschnürt werden. Somit wird auch durch das Fokussiergas verhindert, dass der Lichtbogen punktuell an der Elektrode ansetzt oder auf den Bereich der Elektrode mit geringem Schmelzpunkt überspringt.

Bevorzugt wird das Fokussiergas in Form der wenigstens einen Fokussiergasströmung gezielt um den oder dem ausgewählten Bereich der lichtbogenseitigen Fläche der Elektrode zugeführt. Durch eine Kombination der geeigneten Wahl des vom Elektrodenmaterial verschiedenen Materials für den ausgewählten Bereich und der Zufuhr des geeigneten Fokussiergases wird erreicht, dass der Lichtbogen insbesondere verteilt über den gesamten ausgewählten Bereich ansetzt und dass das Material des ausgewählten Bereichs nicht aufschmilzt. Insbesondere wird das Fokussiergas dem Lichtbogen zugeführt. Vorzugsweise wird das Fokussiergas auf den Lichtbogenansatz zugeführt.

Bevorzugt wird das Fokussiergas in Form der wenigstens einen Fokussiergasströmung als eine Wirbelströmung zugeführt. Unter Wirbelströmung (auch als "swirl" bezeichnet) ist zu verstehen, dass sich die Fokussiergasströmung schrauben- bzw. helixförmig um eine Achse ausbreitet. Diese Achse verläuft insbesondere in Richtung der axialen Ausdehnung der Elektrode, weiter insbesondere in Richtung der Ausbreitung des Lichtbogens. Insbesondere entspricht diese Achse einer Lichtbogenachse des Lichtbogens. Insbesondere ist die Wirbelströmung somit helixförmig um den Lichtbogen herum gerichtet. Die Richtung der Wirbelströmung ist somit eine Überlagerung aus einer ersten Richtung tangential zu dieser Achse und aus einer zweiten, axialen Richtung parallel zu dieser Achse.

Gemäß einer vorteilhaften Ausführung wird das Fokussiergas durch mehrere Fokussiergasbohrungen zugeführt, wobei die Elektrode auf ihrer lichtbogenseitigen Fläche diese Fokussiergasbohrungen zur Zufuhr des Fokussiergases aufweist. Die Fokussiergasbohrungen können dabei jeweils unterschiedliche Durchmesser, Geometrien und Abstände zueinander aufweisen. Alternativ können die Fokussiergasbohrungen auch identisch ausgebildet und/oder auch äquidistant zueinander angeordnet sein. Insbesondere weist die Elektrode mindestens vier Fokussiergasbohrungen auf. Der Schweißbrenner umfasst insbesondere eine geeignete Fokussiergaszufuhr. Die Elektrode kann insbesondere mit dieser Fokussiergaszufuhr verbunden werden. Die Fokussiergaszufuhr ist dazu eingerichtet, das Fokussiergas durch die Fokussiergasbohrungen zuzuführen.

Gemäß einer dritten vorteilhaften Ausführung der Erfindung werden die Energiedichte und/oder der Lichtbogenansatz gezielt beeinflusst, indem ein Gas von der lichtbogenseitigen Fläche der Elektrode abgeführt wird. Das Gas wird dabei aus einem bestimmten Bereich vor der lichtbogenseitigen Fläche der Elektrode abgeführt.

Durch den Lichtbogen wird das Gas vor der lichtbogenseitigen Fläche der Elektrode erwärmt. Dieses erwärmte Gas wird durch die Gasabführung abgeführt. Insbesondere ist das abgeführte Gas ein Schutz-, Plasma- oder Fokussiergas. Schutzgas, welches durch den Lichtbogen erwärmt wird, kann somit abgeführt werden. Insbesondere kann auch Gas zentral zugeführt werden, um eine Strömung zum Werkstück zu erzeugen.

Gas, welches durch den Lichtbogen und durch andere thermische Effekte erhitzt wird und sich vor der Elektrode sammelt, wird somit abgeführt. Somit kann die Temperatur des Gases vor der Elektrode indirekt reduziert werden. Durch eine derartige verringerte Gastemperatur vor der Elektrode wird die Elektrode nicht so stark erhitzt bzw. kann sich leichter abkühlen. Durch das Abführen des Gases wird die Elektrode indirekt gekühlt und ihre thermische Belastbarkeit wird erhöht.

Weiterhin kann somit verhindert werden, dass in dem Gas vor der Elektrode lokale thermische Schwankungen entstehen. Somit kann weiterhin verhindert werden, dass sich die Elektrode in manchen Bereichen lokal stärker erhitzt als in anderen Bereichen. Der Lichtbogen setzt favorisiert an derartigen lokal überhitzten Bereichen auf der Elektrode punktuell an. Durch das Abführen des Gases wird somit ebenfalls ein punktueller Ansatz des Lichtbogens verhindert.

Vorzugsweise wird das abgeführte Gas als Schutzgas zugeführt. Wie weiter oben erwähnt, wird insbesondere Schutzgas abgeführt. Dieses Gas kann im Zuge einer Rückführung erneut als Schutzgas zugeführt werden. Somit können die mittlere Temperatur des Schutzgases und der Energieeintrag in das Werkstück erhöht werden.

Gemäß einer vorteilhaften Ausführung der Erfindung wird das Gas von der lichtbogenseitigen Fläche der Elektrode durch eine axial verlaufende Gasabführbohrung in der Elektrode abgeführt. Die Elektrode ist dabei insbesondere als eine Hohlelektrode ausgebildet. Ein entsprechender Schweißbrenner umfasst insbesondere eine Gasabführung. Diese Gasabführung ist insbesondere dazu eingerichtet, das Gas von der lichtbogenseitigen Fläche der Elektrode durch die axial verlaufende Gasabführbohrung der Elektrode abzuführen.

Vorteilhafterweise wird eine Elektrode aus einem Elektrodenmaterial mit hoher Wärmeleitfähigkeit verwendet, bevorzugt aus Kupfer und/oder Messing. Besonders bevorzugt wird eine Mischlegierung aus Kupfer und Wolfram verwendet. Somit kann die Elektrode sehr effektiv gekühlt werden und besitzt zudem einen hohen Schmelzpunkt. Da der Lichtbogen insbesondere an dem oben erläuterten ausgewählten Bereich ansetzt, muss die Elektrode nicht notwendigerweise aus einem hochschmelzenden Material ausgebildet sein und es kann dennoch verhindert werden, dass die Elektrode aufschmilzt.

Gemäß einer besonders bevorzugten Ausführung der Erfindung wird eine Elektrode verwendet, welche den wenigstens einen Einsatz aus dem vom Elektrodenmaterial verschiedenen Material aufweist und/oder welche auf ihrer lichtbogenseitigen Fläche die Fokussiergasbohrungen zur Zufuhr des Fokussiergases aufweist und/oder welche die wenigstens eine axial verlaufende Gasabführbohrung zur Abfuhr des Gases von der lichtbogenseitigen Fläche der Elektrode aufweist.

Vorteilhafterweise ist der Einsatz im Wesentlichen im Zentrum der lichtbogenseitigen Fläche der Elektrode angeordnet. Insbesondere bildet der Einsatz dabei das Zentrum bzw. eine Spitze der Elektrode.

Vorzugsweise sind die Fokussiergasbohrungen um das Zentrum der lichtbogenseitigen Fläche der Elektrode herum angeordnet. Insbesondere sind die Bohrungen konzentrisch um das Zentrum angeordnet. Durch das zugeführte Fokussiergas wird der Ansatz des Lichtbogens somit insbesondere auf das Zentrum der lichtbogenseitigen Fläche der Elektrode fokussiert.

Bevorzugt ist der Einsatz im Wesentlichen im Zentrum der lichtbogenseitigen Fläche der Elektrode angeordnet und die Fokussiergasbohrungen sind bevorzugt um den Einsatz herum angeordnet. Somit wird einerseits durch den Einsatz erreicht, dass der Lichtbogen in dem Zentrum der lichtbogenseitigen Fläche der Elektrode ansetzt. Andererseits wird der Ansatz des Lichtbogens zusätzlich durch das Fokussiergas auf das Zentrum fokussiert.

Vorzugsweise verjüngt sich die Elektrode zu ihrer lichtbogenseitigen Fläche hin. Die Elektrode weist somit insbesondere eine "Spitze" auf. Somit weißt die Elektrode keine rechtwinkligen oder nahezu rechtwinkligen Kanten zwischen ihrer lichtbogenseitigen Fläche und einer Seiten- bzw. Mantelfläche auf. Die lichtbogenseitige Fläche ist somit schräg in Relation zu der Mantelfläche, also um einen bestimmten Winkel zur Mantelfläche geneigt. Der Ansatz des Lichtbogens kann somit nicht sprunghaft von der lichtbogenseitigen Fläche auf die Mantelfläche der Elektrode überspringen.

Stattdessen kann der Ansatz des Lichtbogens entlang der (schrägen) lichtbogenseitigen Fläche verschoben werden. Besonders bevorzugt ist der Einsatz dabei im Zentrum der lichtbogenseitigen Fläche der Elektrode angeordnet und bildet zumindest teilweise die Spitze bzw. den verjüngten Teil der Elektrode. Insbesondere wird der Ansatz des Lichtbogens durch den Einsatz und das Fokussiergas auf diese Spitze bzw. auf den verjüngten Teil fokussiert. Die Ansatzfläche kann sich mit zunehmender Stromstärke vergrößern, sodass die Stromdichte nahezu gleich bleibt.

Gemäß einer vorteilhaften Ausgestaltung der Erfindung sind die Fokussiergasbohrungen derart ausgebildet, dass sich das zugeführte Fokussiergas bzw. die Fokussiergasströmung in Form der oben erläuterten Wirbelströmung ausbreitet. Eigenschaften der Wirbelströmung, beispielsweise ein Krümmungsradius, eine Ganghöhe und/oder eine Steigung, können durch die Ausgestaltung der Fokussiergasbohrungen sowie der Fokussiergaszufuhr eingestellt werden. Beispielsweise werden die Eigenschaften der Wirbelströmung durch die Anzahl von Fokussiergasbohrungen, durch eine Geometrie der einzelnen Fokussiergasbohrungen, durch eine Anordnung der Fokussiergasbohrungen in Bezug auf die Achse, insbesondere eine Außermittigkeit der Fokussiergasbohrungen in Bezug auf die Achse, und/oder durch eine Anordnung der Fokussiergasbohrungen in Bezug auf das Werkstück eingestellt.

Vorteilhafterweise ist der Einsatz in einem Hohlraum im Inneren der Elektrode angeordnet, insbesondere in einem zylindrischen Hohlraum. Die Mantelfläche zwischen dem Einsatz und der restlichen Elektrode wird insbesondere möglichst groß gewählt, um eine effektive Wärmeableitung zu gewährleisten. Der Einsatz wird insbesondere in einem Herstellungsprozess von dem Grundkörper der restlichen Elektrode umgossen, gesintert oder in diesen eingepresst.

Vorzugsweise umfasst die Elektrode mehrere Einsätze. Ein erster Einsatz ist dabei bevorzugt im Wesentlichen im Zentrum der lichtbogenseitigen Fläche der Elektrode angeordnet. Wenigstens ein weiterer Einsatz ist bevorzugt um diesen ersten Einsatz herum angeordnet. Insbesondere setzt der Lichtbogen dabei an sämtlichen Einsätzen an. Somit kann eine Belastung der einzelnen Einsätze reduziert werden.

Vorzugsweise wird beim Schweißen ein Schutzgas zugeführt. Bevorzugt wird Argon, Helium oder eine Mischung aus Argon, Helium und/oder Sauerstoff und/oder Kohlendioxid als Schutzgas zugeführt. Demgemäß wird insbesondere reines Argon, reines Helium oder eine Mischung aus Argon und Sauerstoff, aus Argon und Helium oder aus Argon, Helium und Sauerstoff als Schutzgas zugeführt.

Bei diesen Mischungen werden insbesondere Sauerstoffanteile zwischen 150 ppm und 1% sowie Helium zwischen 2% und 50% verwendet. Bei einem Werkstück aus hochlegiertem Stahl wird insbesondere ein Schutzgas aus Argon oder Helium und jeweils einem Anteil von bis zu 10% Wasserstoff zugeführt. Beim Plasmaschweißen werden analoge Gemische als Schutzgas eingesetzt. Zusätzlich werden insbesondere das Plasmagas und das Fokussiergas aus den genannten Gasgemischen verwendet.

Ein entsprechender Schweißbrenner umfasst insbesondere eine Schutzgasdüse zur Zufuhr des Schutzgases. Durch das Schutzgas wird der Lichtbogen direkt beeinflusst. Durch eine Zusammensetzung des Schutzgases wird die Effizienz des Schweißens direkt beeinflusst. Im Falle eines Schweißbrenners zum Plasmaschweißen umfasst ein entsprechender Plasmaschweißbrenner alternativ oder zusätzlich insbesondere eine Plasmagasdüse zum Zuführen eines Plasmagases, welches zumindest teilweise ionisiert wird.

Durch das gezielte Beeinflussen der Energiedichte und/oder des Lichtbogenansatzes ist es insbesondere möglich, den Anteil an Helium im Schutzgas zu reduzieren oder ein Argon-Sauerstoff-Gemisch als Schutzgas zu verwenden. Somit kann das Wolfram-Schutzgasschweißen auch an Orten geringer Heliumressourcen effektiv eingesetzt werden. Weiterhin können der Fertigungsaufwand sowie Kosten für den Anwender reduziert werden.

Vorteilhafterweise wird die Elektrode gekühlt, insbesondere mittels einer Wasserkühlungsvorrichtung. Die Elektrode kann somit direkt und/oder indirekt gekühlt werden. Eine derartige indirekte Kühlung ist insbesondere über große Kontaktflächen zwischen der Elektrode und dem restlichen Schweißbrenner realisiert. Eine direkte Kühlung ist insbesondere durch das Anströmen einer Wand bzw. der Mantelfläche der Elektrode mit Kühlwasser realisiert.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Kurze Beschreibung der Zeichnungen
- Figur 1: zeigt schematisch in einer Schnittansicht einen Schweißbrenner zum Wolfram-Schutzgasschweißen, der dazu eingerichtet ist, eine bevorzugte Ausführungsform eines erfindungsgemäßen Verfahrens durchzuführen.
- Figur 2: zeigt schematisch in einer perspektivischen Ansicht eine Elektrode für einen Schweißbrenner zum Wolfram-Schutzgasschweißen, der dazu eingerichtet ist, eine bevorzugte Ausführungsform eines erfindungsgemäßen Verfahrens durchzuführen.

### Ausführungsform(en) der Erfindung

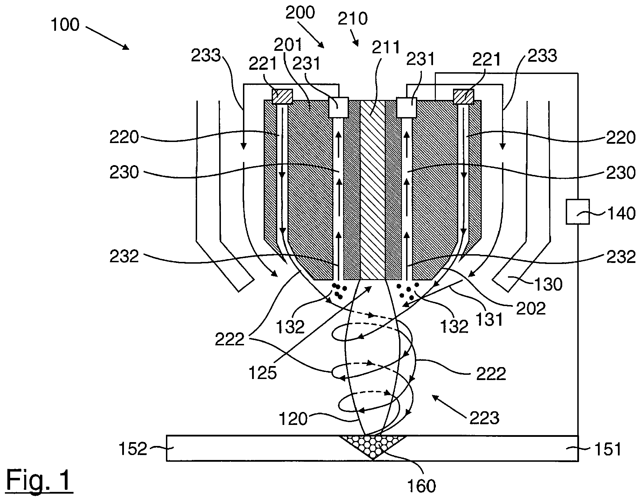

In Figur 1 ist ein Schweißbrenner zum Wolfram-Schutzgasschweißen schematisch dargestellt und mit 100 bezeichnet, der dazu eingerichtet ist, eine bevorzugte Ausführungsform eines erfindungsgemäßen Verfahrens durchzuführen. In diesem Beispiel ist der Schweißbrenner 100 als ein Schweißbrenner zum Wolfram-Inertgasschweißen ausgebildet. Mittels des Schweißbrenners 100 wird durch einen Fügevorgang ein erstes Werkstück 151 mit einem zweiten Werkstück 152 verschweißt.

Der Schweißbrenner 100 weist eine Elektrode 200 auf. Die Werkstücke 151 und 152 und die Elektrode 200 werden mit einer Schweißstromquelle 140 elektrisch verbunden. Die Elektrode 200 wird somit mit einem Schweißstrom bestromt. Die Elektrode 200 wird dabei als Anode verwendet, die Werkstücke 151 und 152 als Kathode. Ein Lichtbogen 120 wird zwischen der Elektrode 200 und den Werkstücken 151 und 152 initiiert und brennt zwischen der Elektrode 200 und den Werkstücken 151 und 152. Durch den Lichtbogen 120 werden das erste und das zweite Werkstück 151 und 152 zumindest teilweise aufgeschmolzen, wodurch ein Schmelzbad 160 entsteht.

Durch den Schweißbrenner 100 wird ein Hochstrom-Schweißen durchgeführt und die Elektrode 200 wird als Hochstrom-Anode verwendet. Die Elektrode 200 wird dabei mit einem Schweißstrom zwischen 80 A und 500 A bestromt.

Der Schweißbrenner 100 weist weiterhin eine Schutzgasdüse 130 auf, um dem Schweißprozess in Richtung des Lichtbogens 120 bzw. in Richtung des Schweißbads 160 ein Schutzgas in Form einer Schutzgasströmung zuzuführen, angedeutet durch Bezugszeichen 131.

Der Lichtbogen 120 setzt an einer lichtbogenseitigen Fläche 202 der Elektrode 200 an. Für einen ausgewählten Bereich dieser lichtbogenseitigen Fläche 202 wird ein Material verwendet, welche sich vom Elektrodenmaterial der restlichen Elektrode unterscheidet.

Zu diesem Zweck weist die Elektrode 200 in ihrem Inneren einen Einsatz 210 auf. Die Elektrode ist dabei aus einem Elektrodenmaterial 201 ausgebildet, und der Einsatz 210 besteht aus einem von dem Elektrodenmaterial 201 verschiedenen Material 211. Das Einsatzmaterial 211 hat dabei einen höheren Schmelzpunkt als das Elektrodenmaterial 201. In diesem Beispiel ist die Elektrode 200 aus Kupfer 201 ausgebildet und der Einsatz 210 aus Wolfram 211.

In diesem Beispiel erstreckt sich der Einsatz 210 über die komplette axiale Ausdehnung der Elektrode 200. Der Einsatz bildet in dem ausgewählten Bereich einen Teil der lichtbogenseitigen Fläche 202 der Elektrode 200. Der Einsatz ist dabei im Zentrum der lichtbogenseitigen Fläche 202 angeordnet. Weiterhin verjüngt sich die Elektrode 200 zu ihrer lichtbogenseitigen Fläche 202 hin.

Werden die Elektrode 200 und die Werkstücke 151 und 152 mit der Schweißstromquelle 140 elektrisch verbunden, setzt der Lichtbogen favorisiert an dem aus Wolfram 211 bestehenden Einsatz 210 an, und weniger favorisiert an der übrigen aus Kupfer 201 ausgebildeten Elektrode 200. Somit wird ein Ansatz 125 des Lichtbogens 120 an der Elektrode 200 gezielt beeinflusst. Weiterhin wird somit die Energiedichte der lichtbogenseitigen Fläche 202 der Elektrode 200 gezielt beeinflusst. Insbesondere setzt der Lichtbogen 120 direkt an dem Einsatz 210 und somit im Zentrum der lichtbogenseitigen Fläche 202 an.

Die Elektrode 200 weist weiterhin Fokussiergasbohrungen 220 auf. In dem Beispiel von Figur 1 sind der Übersichtlichkeit halber nur zwei Fokussiergasbohrungen 220 dargestellt. Bevorzugt weist die Elektrode 200 jedoch mindestens vier, bevorzugt sechs, acht, zehn, zwölf oder vierzehn, Fokussiergasbohrungen 220 auf. Die Fokussierbohrungen 220 sind dabei um den Einsatz 210 herum angeordnet. Die Fokussiergasbohrungen 220 sind mit einer Fokussiergaszufuhr 221 verbunden. Mittels der Fokussiergaszufuhr 221 wird durch die Fokussiergasbohrungen 220 in Richtung des Lichtbogens 120 ein Fokussiergas in Form einer Fokussiergasströmung 222 zugeführt. Fokussiergasbohrungen 220 können beispielsweise auch in anderen Bauteilen des Brenners, wie z.B. der Schutzgasdüse untergebracht sein. Die Wirkung findet jedoch am anodischen Lichtbogenansatz statt.

Als Fokussiergas wird dabei insbesondere Argon zugeführt. Durch das Fokussiergas bzw. durch die Fokussiergasströmung 222 wird der Lichtbogen 120, insbesondere der Lichtbogenansatz 125 fokussiert. Durch das Fokussiergas bzw. durch die Fokussiergasströmung 222 wird der Lichtbogenansatz 125 auf das Zentrum der lichtbogenseitigen Fläche 202 der Elektrode 200 fokussiert (zusätzlich zu dem Einsatz 210). Weiterhin wird die Elektrode 200, insbesondere die lichtbogenseitige Fläche 202 der Elektrode 200, durch das Zuführen des Fokussiergases bzw. durch die Fokussiergasströmung 222 gekühlt. Weiterhin wird die Energiedichte der lichtbogenseitigen Fläche 202 der Elektrode 200 somit gezielt beeinflusst.

Zur Fokussierung kann auch das Schutzgas verwendet werden, indem dieses zumindest teilweise beispielsweise über Blenden auf die Elektrode 220 gerichtet wird. Besonders vorteilhaft kann der Schweißbrenner 100 zu diesem Zweck derart ausgestaltet werden, dass die Elektrode 200 aus der Schutzgasdüse 130 hervorsteht. Somit kann das Zünden des Lichtbogens 120 vereinfacht werden und die Zugänglichkeit sowie die Beobachtbarkeit des Prozesses können verbessert werden.

Die Fokussierbohrungen 220 sind derart in der Elektrode 200 angeordnet, dass sich die Fokussiergasströmung 222 als eine Wirbelströmung (auch als "swirl" bezeichnet) ausbildet. Die Fokussiergasströmung 222 ist somit als eine Schraubenform bzw. als eine Helixform 223 um den Lichtbogen 120 herum gerichtet.

Weiterhin weist die Elektrode 210 zwei axial verlaufende Gasabführbohrungen 230 auf. Die Elektrode 210 ist somit als Hohlanode ausgebildet. Die Gasabführbohrungen 230 verlaufen in diesem Beispiel parallel zu dem Einsatz 210. Eine Gasabführbohrung kann auch in dem Einsatz 210 ausgebildet sein.

Durch den Lichtbogen 120 bzw. durch thermische Effekte des Lichtbogens 120 erwärmt sich das zugeführte Schutzgas. Vor der lichtbogenseitigen Fläche 202 sammelt sich somit erwärmtes Schutzgas 132 (angedeutet durch Punkte). Die Gasabführbohrungen 230 sind mit einer Gasabführung 231 verbunden. Durch die Gasabführung 231 wird das erwärmte Schutzgas 132 von der lichtbogenseitigen Fläche 202 abgeführt, angedeutet durch das Bezugszeichen 232.

Durch das Abführen des erwärmten Schutzgases 132 wird die Elektrode 200, insbesondere die lichtbogenseitige Fläche 202 der Elektrode 200 gekühlt. Somit können der Ansatz 125 des Lichtbogens 120 an der Elektrode 200 und die Energiedichte der lichtbogenseitigen Fläche 202 der Elektrode 200 gezielt beeinflusst werden.

Weiterhin kann das abgeführte Schutzgas 232 durch die Gasabführung 231 dem Schweißprozess erneut als Schutzgas oder als Fokussiergas 222 zugeführt werden. Das rückgeführte Schutzgas ist in Figur 1 mit dem Bezugszeichen 233 angedeutet.

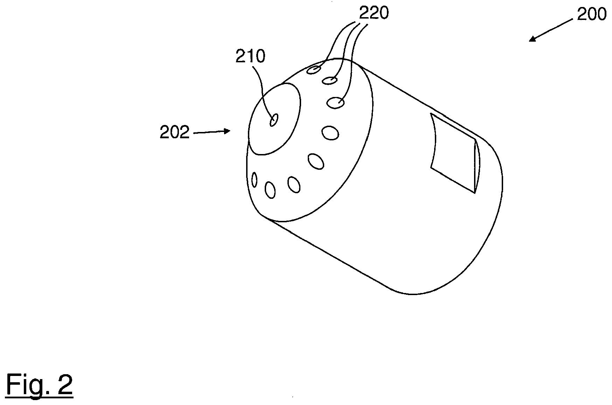

In Figur 2 ist eine weitere Elektrode 200 schematisch in einer perspektivischen Ansicht dargestellt, welche zum Durchführen einer bevorzugten Ausführungsform eines erfindungsgemäßen Verfahrens verwendet werden kann. Identische Bezugszeichen in den Figuren 1 und 2 bezeichnen baugleiche Elemente.

Die Elektrode in Figur 2 weist einen Einsatz 210 und eine Vielzahl von Fokussiergasbohrungen 220 auf. Der Einsatz ist im Zentrum der lichtbogenseitigen Fläche 202 der Elektrode 200 angeordnet. Die Fokussiergasbohrungen 220 sind dabei kreisförmig um den Einsatz 210 herum angeordnet.

### Bezugszeichenliste

- 100: Schweißbrenner
- 120: Lichtbogen
- 125: Ansatz des Lichtbogens
- 130: Schutzgasdüse
- 131: Schutzgasströmung
- 132: erwärmtes Schutzgas
- 140: Schweißstromquelle
- 151: erstes Werkstück
- 152: zweites Werkstück
- 160: Schmelzbad

- 200: Elektrode
- 201: Elektrodenmaterial, Kupfer
- 202: lichtbogenseitige Fläche
- 210: Einsatz
- 211: Einsatzmaterial, Wolfram
- 220: Fokussiergasbohrung
- 221: Fokussiergaszufuhr
- 222: Fokussiergasströmung
- 223: Schraubenform, Helixform
- 230: Gasabführbohrungen
- 231: Gasabführung
- 232: abgeführtes Schutzgas
- 233: rückgeführtes Schutzgas

## Patentansprüche

1. Verfahren zum Wolfram-Inertgasschweißen,
- wobei eine Elektrode (200) und ein Werkstück (151) mit einem Schweißstrom bestromt werden, wobei die Elektrode (200) als Anode und das Werkstück (151) als Kathode bestromt wird,
- wobei ein Lichtbogen (120) zwischen einer lichtbogenseitigen Fläche (202) der Elektrode (200) und dem Werkstück (151) initiiert wird und brennt,
**dadurch gekennzeichnet, dass**
- eine Energiedichte der lichtbogenseitigen Fläche (202) der Elektrode (200) und/oder ein Lichtbogenansatz des Lichtbogens (120) an der lichtbogenseitigen Fläche (202) der Elektrode (200) gezielt beeinflusst werden, indem der lichtbogenseitigen Fläche (202) der Elektrode (200) ein Fokussiergas (222) in Form wenigstens einer Fokussiergasströmung zugeführt wird, wobei zusätzlich ein Schutzgas (131) durch eine Schutzgasdüse (130) beim Schweißen zugeführt wird, wobei die Elektrode (200) aus der Schutzgasdüse (130) hervorsteht.

2. Verfahren nach Anspruch 1, wobei die Energiedichte und/oder der Lichtbogenansatz gezielt beeinflusst werden, indem für einen ausgewählten Bereich der lichtbogenseitigen Fläche (202) der Elektrode ein Material (211) verwendet wird, welches sich von einem Elektrodenmaterial (201) der übrigen Elektrode unterscheidet.

3. Verfahren nach Anspruch 2, wobei das von dem Elektrodenmaterial (201) verschiedene Material (211) und/oder ein Durchmesser des ausgewählten Bereichs in Abhängigkeit von einer Stromstärke des Schweißstroms gewählt wird.

4. Verfahren nach Anspruch 2 oder 3, wobei ein hochschmelzendes Material, welches höherschmelzende als das Elektrodenmaterial (201) ist, als Material (211) für den ausgewählten Bereich verwendet wird.

5. Verfahren nach einem der Ansprüche 2 bis 4, wobei Zirkonium, Kohlenstoff, Rhenium, Tantal, Yttrium, Niob, Hafnium, Wolfram oder Wolfram mit einem Zusatz aus Lanthan, Cer, Yttrium, Zirconium und/oder Thorium als Material (211) für den ausgewählten Bereich verwendet wird.

6. Verfahren nach einem der Ansprüche 2 bis 5, wobei das Material (211) für den ausgewählten Bereich in Form eines Einsatzes (210) in der lichtbogenseitigen Fläche (202) der Elektrode verwendet wird.

7. Verfahren nach einem der vorstehenden Ansprüche , soweit auf einen der Ansprüche 2 bis 6 rückbezogen, wobei das Fokussiergas (222) in Form der wenigstens einen Fokussiergasströmung gezielt um den oder dem ausgewählten Bereich der lichtbogenseitigen Fläche (202) der Elektrode (200) und/oder auf den Lichtbogenansatz zugeführt wird.

8. Verfahren nach einem der vorstehenden Ansprüche, wobei das Fokussiergas (222) in Form der wenigstens einen Fokussiergasströmung als eine Wirbelströmung zugeführt wird.

9. Verfahren nach einem der vorstehenden Ansprüche, wobei Argon, Helium oder ein Gemisch aus Argon und Helium sowie erstgenannte Gase oder Gasgemische mit Zusätzen an Sauerstoff als Fokussiergas (222) zugeführt wird.

10. Verfahren nach einem der vorstehenden Ansprüche, wobei das Fokussiergas (222) durch mehrere Fokussiergasbohrungen (220) zugeführt wird, wobei die Elektrode (200) auf ihrer lichtbogenseitigen Fläche diese Fokussiergasbohrungen (220) zur Zufuhr des Fokussiergases (222) aufweist.

11. Verfahren nach einem der vorstehenden Ansprüche, wobei die Energiedichte und/oder der Lichtbogenansatz gezielt beeinflusst werden, indem ein Gas (132) von der lichtbogenseitigen Fläche (202) der Elektrode (200) abgeführt wird.

12. Verfahren nach Anspruch 11, wobei das Gas (132) von der lichtbogenseitigen Fläche (202) der Elektrode (200) durch wenigstens eine axial verlaufende Gasabführbohrung (230) in der Elektrode (200) abgeführt wird.

13. Verfahren nach einem der vorstehenden Ansprüche, wobei Argon, Helium oder eine Mischung aus Argon, Helium und/oder Sauerstoff oder Kohlendioxid als ein Schutzgas zugeführt wird.

14. Verfahren nach einem der vorstehenden Ansprüche, wobei die Elektrode gekühlt wird, insbesondere mittels einer Wasserkühlungsvorrichtung.

15. Verfahren nach einem der vorstehenden Ansprüche, wobei ein Hochstrom-Pluspol-Schweißen durchgeführt wird und/oder die Elektrode (200) mit einem Schweißstrom mit einer Stromstärke zwischen 80 A und 500 A bestromt wird.

## Claims

1. Method for tungsten inert-gas welding,
- wherein a welding current is applied to an electrode (200) and a workpiece (151), wherein current is applied to the electrode (200) as an anode and to the workpiece (151) as a cathode,
- wherein an electric arc (120) is initiated and burns between an arc-side surface (202) of the electrode (200) and the workpiece (151), **characterized in that**
- an energy density of the arc-side surface (202) of the electrode (200) and/or an arc striking point of the arc (120) on the arc-side surface (202) of the electrode (200) are specifically influenced, **in that** a focusing gas (222) in the form of at least one focusing gas flow is supplied to the arc-side surface (202) of the electrode (200), wherein a shielding gas (131) is additionally supplied through a shielding gas nozzle (130) during welding, wherein the electrode (200) protrudes out of the shielding gas nozzle (130).

2. Method according to Claim 1, wherein the energy density and/or the arc striking point are specifically influenced, in that a material (211) that differs from an electrode material (201) of the remaining electrode is used for a selected region of the arc-side surface (202) of the electrode.

3. Method according to Claim 2, wherein the material (211) that is different from the electrode material (201) and/or a diameter of the selected region is chosen in dependence on a current intensity of the welding current.

4. Method according to Claim 2 or 3, wherein a high-melting material, which is higher-melting than the electrode material (201), is used as the material (211) for the selected region.

5. Method according to one of Claims 2 to 4, wherein zirconium, carbon, rhenium, tantalum, yttrium, niobium, hafnium, tungsten or tungsten with an addition of lanthanum, cerium, yttrium, zirconium and/or thorium is used as the material (211) for the selected region.

6. Method according to one of Claims 2 to 5, wherein the material (211) for the selected region is used in the form of an insert (210) in the arc-side surface (202) of the electrode.

7. Method according to one of the preceding claims, to the extent to which they refer back to one of Claims 2 to 6, wherein the focusing gas (222) in the form of the at least one focusing gas flow is supplied specifically around the selected region of the arc-side surface (202) of the electrode (200) and/or to the arc striking point.

8. Method according to one of the preceding claims, wherein the focusing gas (222) in the form of the at least one focusing gas flow is supplied as a turbulent flow.

9. Method according to one of the preceding claims, wherein argon, helium or a mixture of argon and helium and the first-mentioned gases or gas mixtures with additions of oxygen are supplied as focusing gas (222) .

10. Method according to one of the preceding claims, wherein the focusing gas (222) is supplied through multiple focusing gas bores (220), wherein the electrode (200) has these focusing gas bores (220) for supplying the focusing gas (222) on its arc-side surface.

11. Method according to one of the preceding claims, wherein the energy density and/or the arc striking point are specifically influenced, in that a gas (132) is removed from the arc-side surface (202) of the electrode (200).

12. Method according to Claim 11, wherein the gas (132) is removed from the arc-side surface (202) of the electrode (200) through at least one axially extending gas removal bore (230) in the electrode (200) .

13. Method according to one of the preceding claims, wherein argon, helium or a mixture of argon, helium and/or oxygen or carbon dioxide is supplied as a shielding gas.

14. Method according to one of the preceding claims, wherein the electrode is cooled, in particular by means of a water cooling device.

15. Method according to one of the preceding claims, wherein a high-current reverse-polarity welding is carried out and/or a welding current with a current intensity of between 80 A and 500 A is applied to the electrode (200).

## Revendications

1. Procédé de soudage au tungstène sous gaz inerte,
- une électrode (200) et une pièce à usiner (151) étant alimentées avec un courant de soudage, l'électrode (200) étant alimentée en tant qu'anode et la pièce à usiner (151) en tant que cathode,
- un arc électrique (120) étant amorcé et brûlant entre une surface côté arc électrique (202) de l'électrode (200) et la pièce à usiner (151), **caractérisé en ce que**
- une densité énergétique de la surface côté arc électrique (202) de l'électrode (200) et/ou une naissance d'arc électrique de l'arc électrique (120) au niveau de la surface côté arc électrique (202) de l'électrode (200) étant influencées de manière ciblée en acheminant à la surface côté arc électrique (202) de l'électrode (200) un gaz de concentration (222) sous la forme d'au moins un courant de gaz de concentration, un gaz protecteur (131) étant en plus acheminé au travers d'une buse à gaz protecteur (130) lors du soudage, l'électrode (200) faisant saillie hors de la buse à gaz protecteur (130).

2. Procédé selon la revendication 1, la densité énergétique et/ou la naissance d'arc électrique étant influencées de manière ciblée en utilisant, pour une zone choisie de la surface côté arc électrique (202) de l'électrode (200), un matériau (211) qui se différencie d'un matériau d'électrode (201) du reste de l'électrode.

3. Procédé selon la revendication 2, le matériau (211) différent d'un matériau d'électrode (201) et/ou un diamètre de la zone choisie étant choisi en fonction d'une intensité de courant du courant de soudage.

4. Procédé selon la revendication 2 ou 3, un matériau à point de fusion élevé, dont le point de fusion est plus élevé que celui du matériau d'électrode (201), étant utilisé comme matériau (211) pour la zone choisie.

5. Procédé selon l'une des revendications 2 à 4, du zirconium, du carbone, du rhénium, du tantale, de l'yttrium, du niobium, du hafnium, du tungstène ou du tungstène avec un complément de lanthane, de cérium, de tungstène , de zirconium et/ou de thorium étant utilisé comme matériau (211) pour la zone choisie.

6. Procédé selon l'une des revendications 2 à 5, le matériau (211) pour la zone choisie étant utilisé sous la forme d'un insert (210) dans la surface côté arc électrique (202) de l'électrode.

7. Procédé selon l'une des revendications précédentes, sous réserve de se référer aux revendications 2 à 6, le gaz de concentration (222) sous la forme de l'au moins un courant de gaz de concentration étant acheminé de manière ciblée autour de la zone choisie de la surface côté arc électrique (202) de l'électrode (200) et/ou sur la naissance d'arc électrique.

8. Procédé selon l'une des revendications précédentes, le gaz de concentration (222) sous la forme de l'au moins un courant de gaz de concentration étant acheminé sous la forme d'un courant tourbillonnaire.

9. Procédé selon l'une des revendications précédentes, de l'argon, de l'hélium ou un mélange d'argon et d'hélium ainsi que les gaz ou mélanges gazeux mentionnés en premier avec des additifs étant acheminés à de l'oxygène en tant que gaz de concentration (222).

10. Procédé selon l'une des revendications précédentes, le gaz de concentration (222) étant acheminé au travers de plusieurs orifices à gaz de concentration (220), l'électrode (200) possédant ces orifices à gaz de concentration (220) servant à l'acheminement du gaz de concentration (222) sur sa surface côté arc électrique.

11. Procédé selon l'une des revendications précédentes, la densité énergétique et/ou la naissance d'arc électrique étant influencées de manière ciblée en évacuant un gaz (132) de la surface côté arc électrique (202) de l'électrode (200).

12. Procédé selon la revendication 11, le gaz (132) étant évacué de la surface côté arc électrique (202) de l'électrode (200) au travers d'au moins un orifice d'évacuation de gaz (230) qui s'étend axialement dans l'électrode (200).

13. Procédé selon l'une des revendications précédentes, de l'argon, de l'hélium ou un mélange d'argon, d'hélium et/ou d'oxygène ou de dioxyde de carbone étant acheminé en tant que gaz protecteur.

14. Procédé selon l'une des revendications précédentes, l'électrode étant refroidie, notamment au moyen d'un arrangement de refroidissement par eau.

15. Procédé selon l'une des revendications précédentes, un soudage à pôle positif à courant fort étant effectué et/ou l'électrode (200) étant alimentée avec un courant de soudage ayant une intensité de courant entre 80 A et 500 A.
